# EUROPÄISCHE PATENTSCHRIFT

(11) **EP 3 380 652 B1**
(45) Veröffentlichungstag und Bekanntmachung des Hinweises auf die Patenterteilung: **25.08.2021**
(21) Anmeldenummer: 16801220.1
(22) Anmeldetag: 24.11.2016
(51) Int. Cl.: C25B 15/08, C25B 1/04, H01M 8/04223, H01M 8/0662, H01M 8/04119

(54) **DYNAMISCHE PURGEKAMMER**
DYNAMIC PURGE CHAMBER
CHAMBRE DE PURGE DYNAMIQUE

(30) Priorität: 25.11.2015 DE 102015120456
(43) Veröffentlichungstag der Anmeldung: 03.10.2018
(73) Patentinhaber: HPS Home Power Solutions GmbH, 12489 Berlin (DE)
(72) Erfinder: HIERL, Andreas, 12526 Berlin (DE); RADUE, Dirk, 12685 Berlin (DE); SCHNEIDER, Gunnar, 15745 Wildau (DE); BENZ, Uwe, 88690 Uhldingen (DE); SCHRÖDER, Kevin, 10243 Berlin (DE); ABUL-ELLA, Zeyad, 14195 Berlin (DE)
(74) Vertreter: Eisenführ Speiser
(86) Internationale Anmeldenummer: PCT/EP2016/078687
(87) Internationale Veröffentlichungsnummer: WO 2017/089466

(56) Entgegenhaltungen:
- WO-A2-2012/113932
- DE-A1-102014 103 724
- JP-A- 2001 130 901
- US-A1- 2002 094 469
- US-A1- 2005 214 617
- US-A1- 2006 105 224
- US-A1- 2006 263 658
- US-A1- 2013 149 627

## Beschreibung

Die vorliegende Erfindung betrifft eine Spülanordnung zum Spülen (Purgen) einer Brennstoffzelleneinheit auf ihrer Anodenseite und/oder einer Elektrolyseeinheit auf ihrer Kathodenseite. Die vorliegende Erfindung betrifft ebenfalls eine Hausenergiezentrale sowie ein Verfahren zum Betreiben einer Hausenergiezentrale.

Anordnungen zum Spülen einer Brennstoffzelleneinheit auf ihrer Anodenseite und/oder einer Elektrolyseeinheit auf ihrer Kathodenseite sind grundsätzlich aus dem Stand der Technik bekannt. Ein Spülen ist erforderlich, um unerwünschte Fremdgasanteile, sowie sich lokal in den Zellstrukturen ansammelndes flüssiges Wasser die die Leistungsfähigkeit und die Lebensdauer der Brennstoffzelle und/oder des Elektrolyseurs negativ beeinflussen können, in regelmäßigen Abständen oder abhängig von den Betriebszuständen abzuführen.

Es ist Aufgabe der vorliegenden Erfindung, eine hinsichtlich H₂-Sicherheit, Betriebsverhalten und Auslegung der relevanten Stoffströme verbesserte Spülanordnung, eine Hausenergiezentrale mit einer Spülanordnung sowie ein Verfahren zum Betreiben einer Hausenergiezentrale anzugeben.

Aus US 2006/0105224 A1 ist ein Brennstoffzellensystem beschrieben, das Mittel zum Spülen (purgen) des Brennstoffzellenstacks aufweist.

Aus US 2002/0094469 A1 ist ein Brennstoffzellensystem bekannt, das einen balgenartigen Pufferspeicher aufweist, um ausgespülten Wasserstoff langsamer an die Umgebung abgeben zu können.

Aus DE 10 2014 103 724 A1 ist eine Brennstoffzellenvorrichtung mit einer Purgevorrichtung und einem Pufferbehälter bekannt.

Aus US 2005/0214617 A1 ist ein Brennstoffzellensystem mit einem Akkumulator zum Auffangen ausgespülten Anodengases bekannt.

Aus US 2006/0263658 A1 ist ein Brennstoffzellensystem mit einer Kammer zum zwischenzeitlichen Aufnehmen ausgespülten Wasserstoffs bekannt.

Aus US 2013/0149627 ist ein Brennstoffzellensystem mit einem Puffertank bekannt, der einen Füllstandsensor für in dem Puffertank sich ansammelndes Wasser aufweist.

Aus WO 2012/113932 A2 ist ein Lüftungs- und Heizsystem bekannt, bei dem die Abwärme einer Brennstoffzelle zum Wärmen eines Raums genutzt werden kann.

Aus JP 2001130901 ist ein Brennstoffzellensystem bekannt, das eine Druckausgleichseinheit mit zwei Kammern aufweist, die durch eine Membran so voneinander getrennt sind, dass die Volumina der beiden Kammern sich durch entsprechendes Auslenken der Membran ändern können.

Bezüglich der Spülanordnung wird die Aufgabe gelöst durch eine Spülanordnung nach Anspruch 1. Der Ablass-Massenstrom, welcher typischerweise großteils aus H₂ besteht, kann einem Luftmassenstrom zugemischt werden, so dass das entstehende Gasgemisch eine H₂-Konzentration in allen Betriebszuständen deutlich unterhalb der unteren Zündgrenze von H₂ in Luft aufweist. Durch diesen Verdünnungseffekt ist ein sicherer Betrieb der Anlage möglich.

Das Ausströmelement kann als Blende, Drossel, Düse, Strahlpumpe, Venturidüse oder Rekombinator ausgebildet sein. Der Pufferspeicher kann vom zweiten Spülkanalabschnitt abzweigen. Der zweite Spülkanalabschnitt kann zumindest abschnittweise durch den Pufferspeicher verlaufen.

Die Erfindung schließt die Erkenntnis ein, dass bei einem Purgen gemäß des Standes der Technik, das pulsartig mit einem Spül-Massenstrom erfolgt, typischerweise über Bruchteile einer Sekunde relativ hohe Mengen von Wasserstoff aus einer Brennstoffzelleneinheit und/oder einer Elektrolyseeinheit ausgespült werden. Im Anschluss an einen derartigen pulsartigen Purge wird längere Zeit kein Wasserstoff mehr freigesetzt. Dadurch können bei der Zumischung zur Abluft lokal und temporär kritisch hohe Wasserstoffkonzentrationen, insbesondere auch Konzentrationen über der unteren Zündgrenze, auftreten, die zu einer gefährlichen Knallgasreaktion führen können. Zumindest während des Pulses mit hohem Spül-Massenstrom ist daher der Abluft-Massenstrom zu erhöhen, um einen hinreichenden Verdünnungseffekt zu gewährleisten.

Dadurch, dass erfindungsgemäß dem Purge-Ventil ein Pufferspeicher mit einer Speicherkammer nachgeschaltet ist, kann die pulsartig mit dem Spül-Massenstrom ausgetragene Fluidmasse mit einem Ablass-Massenstrom, der geringer als der Spül-Massenstrom ist, ausgetragen werden. Vorteilhafterweise ergibt sich dadurch eine Glättung des pulsartigen Spül-Massenstroms, was vorteilhaft zur Vermeidung von kritischen Wasserstoffkonzentrationen bei gleichzeitig niedrigerem Abluft-Massenstrom führt.

Erfindungsgemäß ist die Speicherkammer expandierbar. Die Speicherkammer ist durch die pulsartig mit dem Spül-Massenstrom aus der Brennstoffzelleneinheit und/oder der Elektrolyseeinheit auszuspülenden Fluidmasse expandierbar. Besonders bevorzugt ist die Speicherkammer als Faltenbalg ausgebildet, der ein jeweiliges Spül-Volumen, d.h. den Spül-Massenstrom multipliziert mit einer Pulsdauer eines Purges, ohne oder mit nur geringfügigem Aufbau von Gegendruck aufnehmen kann. Eine als Faltenbalg ausgebildete Speicherkammer kann ausgebildet sein, durch eine Gravitationskraft, insbesondere ausschließlich durch eine Gravitationskraft einer bevorzugt frei beweglichen Endplatte des Faltenbalgs, in ihren nicht expandierten Zustand zurückbewegt zu werden. Zur gezielten Anpassung der Kraft, die den Faltenbalg in seinen nicht expandierten Zustand zurückbewegt, und damit der Entladezeit und des Druckverlaufes des Faltenbalgpuffers über der Zeit, kann die Gravitationskraft auch durch eine angebrachte Federvorrichtung verstärkt oder teilweise kompensiert sein.

Um erhöhte Leistungsverluste und Alterungseffekte auszuschließen, ist es vorteilhaft, pro Spülvorgang jeweils ca. 0,75 Nl (Normliter) H₂-reiches Gas pro kW Nennleistung der Brennstoffzelleneinheit anodenseitig auszuspülen. Bevorzugt dauert ein pulsartiger Spülvorgang weniger als 0,5 s, vorzugsweise maximal 0,2 s. Es ist ebenfalls vorteilhaft, pro Spülvorgang jeweils ca. 0,75 NI (Normliter) H₂-reiches Gas pro kW Nennleistung der Elektrolyseeinheit auszuspülen.

Im Folgenden, wenn nicht anders erwähnt, soll davon ausgegangen werden, dass eine Auslegung der Spülstrecke hinsichtlich der Brennstoffzelleneinheit-Anforderungen auch für die Elektrolyseeinheit ausreichend ist. Bei deutlich geänderten Leistungsgrößen und Betriebsbedingungen im Gesamtsystem sind die Auslegungen jedoch auch analog über spezielle Elektrolyseeinheit -Spülanforderungen durchführbar.

Der Druck auf der Anodenseite und damit der Vordruck beim Spül-Prozess ist bei einer Brennstoffzelleneinheit, die luftseitig bei Umgebungsdruck arbeitet, typischerweise bei etwa 300 Millibar.

Der Spül-Massenstrom und das Spülvolumen für die Brennstoffzelleneinheit kann seitens der Spülanordnung, bei üblicherweise fest eingestelltem Anodendruck, über den Strömungswiderstand des Brennstoffzellen-Purge-Ventils (beispielsweise ein Elektromagnetventil) und/oder die Öffnungszeit während des Pulses einstellbar sein.

Der Spül-Massenstrom und das Spülvolumen für die Elektrolyseeinheit kann über die Wahl des Kathodendruckes, bei welchem der Spülvorgang beginnt, den Strömungswiderstand des Elektrolyse-Purge-Ventils (beispielsweise ein Elektromagnetventil) und/oder die Öffnungszeit während des Pulses einstellbar sein.

Das Verhältnis von Abluft-Massenstrom und Ablass-Massenstrom sowie die Effizienz der Vermischung beider Massenströme bestimmen die Konzentration von brennbaren Gasen, insbesondere H₂, in der Fortluft. Diese soll aus Sicherheitsgründen deutlich unterhalb der Unteren Zündgrenze von H₂ in Luft sein (die UZG von H₂ in Luft liegt bei 4%), vorzugsweise unterhalb von ca. 2 %. Bei gegebenem Abluft-Massenstrom kann dies zur limitierenden Größe für den noch erlaubten maximalen Ablass-Massenstrom werden und die gesamte Spülanordnung ist daraufhin zu dimensionieren.

Über die Parameter Querschnittsfläche des Faltenbalgs, Längen- zu DurchmesserVerhältnisses des Faltenbalgs, Federsteifigkeit des Balgmaterials, Gewicht der frei beweglichen Endplatte, und insbesondere über die Auslegung des Strömungswiderstands des Ausströmelements kann das Lade-/Entladeverhalten, insbesondere der Verlauf des Ablass-Massenstroms über der Zeit ausgelegt sein. Nachfolgend beschriebene Auslegungsdaten des Faltenbalgs und des Ausströmelements können für eine Spülvorrichtung für ein Brennstoffzelleneinheit mit einer Nennleistung von 1 kW gelten.

Besonders bevorzugt ist ein Durchflusskoeffizient des Ausströmelements größer oder gleich dem des Purge-Ventils.

Bevorzugt beträgt die Querschnittsfläche des Faltenbalgs 100 bis 150 cm². Besonders bevorzugt beträgt das Längen- zu Durchmesser-Verhältnis eines aktiven Volumens des Faltenbalgs bei maximaler Auslenkung 1,5 : 1 bis 1 : 1. Die Federsteifigkeit des Balges liegt bevorzugt zwischen 50 und 100 N/m. Das Material des elastischen Teils des Faltenbalges kann vorzugsweise aus einem chemisch stabilen und dauerhaft elastischen Elastomer oder aus einem im Kontakt mit Wasserstoff nicht versprödenden Metall bestehen.

Das Ausströmelement hat bevorzugt einen im Wesentlichen gleich großen Durchflusskoeffizienten wie das Purge-Ventil. Dies kann beispielsweise über eine Blende mit einem freien Durchmesser von ca. 1 mm erreicht werden. Das Gewicht der frei beweglichen Endplatte beträgt bevorzugt zwischen 0,3 und 0,5 kg. Bevorzugt weist eine als Faltenbalg ausgebildete Speicherkammer in expandiertem Zustand ein Volumen von weniger als 3 L, bevorzugt weniger als 2,6 L auf.

Bevorzugt ist der Faltenbalg ausgelegt, dass der Überdruck im Faltenbalg gegenüber der Umgebung im Betrieb maximal dem Anoden-Nenndruck entspricht, beispielsweise 300 Millibar beträgt. Besonders bevorzugt ist der Faltenbalg ausgelegt, dass der Überdruck bei Maximalauslenkung kleiner als 100 Millibar beträgt und/oder beim nominalen Betrieb, d.h. bis zu ca. 50 Prozent seiner Maximalauslenkung höchstens 20 Millibar beträgt.

Das Totvolumen einer als Faltenbalg ausgebildeten Speicherkammer ist bevorzugt aus Sicherheitsgründen minimal ausgeführt. Besonders bevorzugt ist ein Totvolumen einer als Faltenbalg ausgebildeten Speicherkammer kleiner als 250 ml.

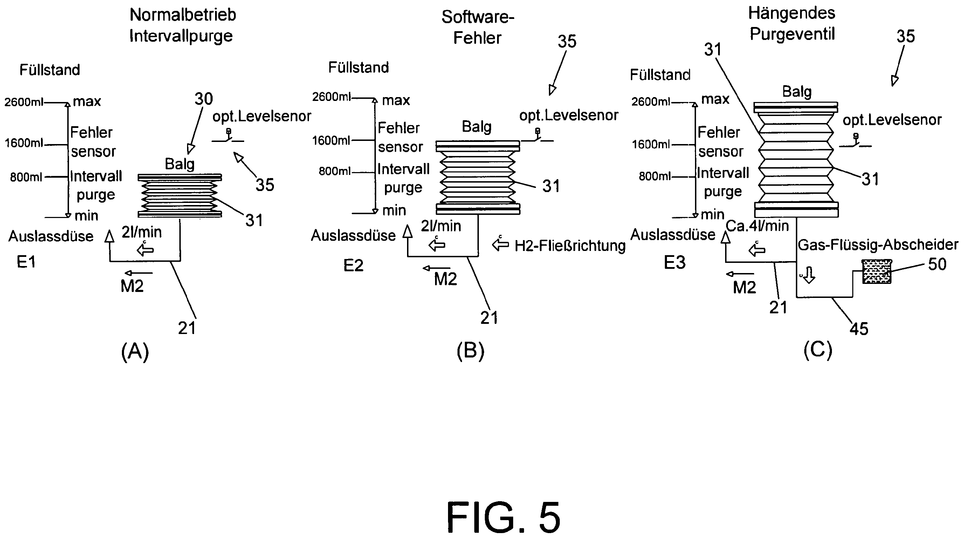

Die Speicherkammer kann als Blasenspeicher oder als Kolbenspeicher (vgl. Fig. 5) ausgebildet sein. Alternativ zu einer expandierbaren Ausbildung der Speicherkammer kann die Speicherkammer als starrer Druckbehälter ausgebildet sein, bei welchem die Speicherkammer derart ausgebildet ist, dass die pulsartig mit dem Spül-Massenstrom aus der Brennstoffzelleneinheit und/oder der Elektrolyseeinheit ausgespülte Fluidmasse zu einem Druckanstieg in der Speicherkammer führt.

In einer bevorzugten Ausgestaltung weist der Pufferspeicher eine Auslassdrossel als Ausströmelement auf, die als Blende ausgebildet sein kann. Die Auslassdrossel kann derart dimensioniert sein, dass beispielsweise eine als Faltenbalg ausgebildete Speicherkammer mit einem Volumen von 2,6 L in expandiertem Zustand innerhalb von wenigstens 30 Sekunden entladen wird.

Das Ausströmelement kann bevorzugt ein Sintermetallzylinder oder ein Sinterkeramikzylinder oder ein Metallvlies sein, über welches der Ablass-Massenstrom gleichmäßig in die Abluft verteilt wird. Damit wird die Vermischung des ausströmenden wasserstoffhaltigen Gases mit der die Wasserstoff-Konzentration verdünnenden Abluft verbessert. Der vorteilhafte Nenndruckverlust über diese Vorrichtung kann analog zur oben beschriebenen Auslassdrossel dimensioniert sein.

Das Ausströmelement kann bevorzugt ein katalytisch aktiver Rekombinator sein oder einen solchen aufweisen. Bevorzugt wird diesem ein wasserstoffhaltiger Ablassmassenstrom bei Anwesenheit eines Oxidationskatalysators, vorzugsweise edelmethallhaltige Katalysatoren aus der Platinmetallgruppe, Luft in hohem Überschuss zugeführt, so dass die Rekombination des Wasserstoffs mit dem Luftsauerstoff, bei ca. 0,5% bis 8 % Wasserstoff in Luft, vorzugsweise bei 1% bis 5% Wasserstoff in Luft, kontrolliert und flammenlos zu Wasser unter Freisetzung von Wärme erfolgt.

Es hat sich als vorteilhaft herausgestellt, wenn dem Rekombinator ein Kompressor zur Versorgung des Rekombinators mit Luft zugeordnet ist, dessen Ansteuerung mit einer Ansteuerung des Purge-Ventils zeitlich gekoppelt ist. Alternativ oder zusätzlich kann die Ansteuerung des Kompressors an den zeitlichen Vorlauf und/oder Nachlauf eines Lüftungsgerät einer Hausenergiezentrale gekoppelt sein. Alternativ oder zusätzlich kann die Ansteuerung des Kompressors an eine Auslass-Temperatur des Ablass-Massenstroms und/oder eines durch ein Lüftungsgerät einer Hausenergiezentrale bewirkten Abluftstroms/Fortluftstroms sein.

Vorteil der Erfindung ist, dass sich durch die Vergleichmäßigung des Ablass-Massenstromes durch den Pufferspeicher die auftretenden Konzentrationen gut einstellen lassen und die Rekombination erst dadurch mit geringem Regelungsaufwand sicher beherrschbar ist. Damit ist die im Ablass-Massenstrom enthaltenen chemische Energie des Wasserstoffs thermisch im Prozess nutzbar und die Abluft des Systems wird nicht mit Wasserstoff aus dem Spülvorgang belastet.

Es hat sich als vorteilhaft herausgestellt, wenn das Ausströmelement auf einen Massenstrom von kleiner als 2,5 NI/min pro kW Brennstoffzellen-Nennleistung, bevorzugt höchstens 2,0 Nl/min pro kW Brennstoffzellen-Nennleistung, jeweils im Normbetrieb (fehlerfreier Betrieb des Pufferspeichers) ausgelegt ist.

Die Spülanordnung kann ausgebildet sein, einen Spül-Volumenstrom auf einen Ablass-Volumenstrom von weniger als 10%, vorzugsweise weniger als 3 % des Spül-Volumenstroms zu reduzieren. Bevorzugt erfolgt ein Austragen des Ablass-Volumenstrom zur Umgebung über einen mindestens 50 Nm³/h großen Abluftstrom/Fortluftstrom. Bevorzugt liegt ein Nenn-Betriebsdruck der Speicherkammer weniger als 50 Millibar, bevorzugt weniger als 20 Millibar über einem Betriebsdruck des Abluftstroms/Fortluftstroms.

Beim Spülvorgang kann bestimmungsgemäß flüssiges Wasser mit ausgetragen werden. In einer bevorzugten Variante wird das Wasser zunächst vom Gasstrom abgeschieden und danach vorteilhafterweise in den Prozess der Brennstoffzelle und/oder der Elektrolyse zurückgeführt. Die Wasser-Abscheidung kann vorteilhaft im Pufferbehälter realisiert sein, da dort die Strömungsgeschwindigkeiten des Trägergases für eine Abscheidung der Flüssigkeit über Gravitationskräfte vorteilhaft gering sind.

Vorzugsweise hat der Pufferbehälter mindestens je einen Eingang und/oder einen Ausgang für das Spülgas. Flüssigkeit, die zusammen mit dem wasserstoffhaltigen Spülgas über den Einlass mit hoher Strömungsgeschwindigkeit in den Pufferbehälter gelangt, kann dort vorzugsweise gravimetrisch oder/und durch strömungsführende und/oder tropfenabscheidende Einbauten und/oder bei entsprechender tangentialer Einleitung durch Zentrifugalkräfte oder durch andere gängige Verfahren nach dem Stand der Technik vom Gasstrom abgeschieden werden. Die Flüssigkeit kann vorzugsweise am Boden des Pufferspeichers gesammelt und geschlossen über den Flüssigkeitsauslass abgeleitet und vorzugsweise dem Prozess wieder zugeführt werden.

Die Spülanordnung kann an einen Gas-Flüssig-Abscheider, vorzugsweise an einen in der Elektrolyseeinheit vorhandenen Sauerstoffabscheider oder an den ebenfalls dort vorhandenen Wassernachfüllbehälter und/oder einen Ausgleichsbehälter angeschlossen sein und/oder einen solchen aufweisen.

Der Gas-Flüssig-Abscheider und/oder der Ausgleichsbehälter kann in einem von dem zweiten Spülabschnitt abzweigenden Nebenkanal angeordnet sein. Bevorzugt ist ein Ausgleichsbehälter einem Gas-Flüssig-Abscheider nachgeschaltet. Es hat sich als vorteilhaft herausgestellt, wenn der Nebenkanal siphonartig ausgebildet ist. Ein siphonartig ausgebildeter Nebenkanal kann als Überdruckschutz für den Pufferspeicher dienen, dessen Wassersäule bei zu hohem Überdruck des Wasserstoffs in den Gas-Flüssig-Abscheider drücken kann. Der dann über Nebenkanal abfließende Wasserstoff führt zu einer Druckentlastung des Pufferspeichers. In einer bevorzugten Variante kann in den siphonartig ausgebildeten Nebenkanal auch eine Gas-Flüssig-Abscheidung integriert sein. Durch eine derartige Ausgestaltung der Spülanordnung kann auch das Wasser aus dem Spülvorgang wieder zur Nutzung in das Elektrolysemodul zurückgeführt werden.

Die Spülanordnung weist einen Füllstandssensor auf, insbesondere einen dem Pufferspeicher zugeordneten Füllstandssensor. Der Füllstandssensor ist erfindungsgemäß zum Detektieren eines Expansionszustands der Speicherkammer ausgebildet und angeordnet sein. Der Füllstandssensor kann vorzugsweise als optischer Sensor oder magnetischer Sensor oder als Ultraschallsensor ausgebildet sein und ist vorzugsweise für den Betrieb in einer potentiell wasserstoffhaltigen Umgebung zulässig. Bevorzugt ist der Füllstandssensor derart angeordnet und eingestellt, dass dieser bei einem Expansions zustand von bevorzugt maximal 80 % des Maximalvolumens, welcher bei einem fehlerhaft nicht mehr schließenden Magnetventil auftreten kann, eine Sicherheitskette auslöst und weiteres Ausströmen von Wasserstoff verhindert. Über den Füllstandssensor kann in einem bevorzugten Verfahren auch die Qualität des Spülvorgangs überwacht und/oder der Spülvorgang von einem gesteuerten Prozess über die Erfassung des tatsächlich gespülten Volumens in einen geregelt Prozess überführt werden.

In einer weiteren bevorzugten Ausführung kann ein weiterer oder weitere Pufferspeicher mit jeweils einer expandierbaren Speicherkammer von der Spülanordnung umfasst sein. Wenigstens zwei der Speicherkammern können, bezüglich eines Durchströmens durch den Spül-Massenstrom, derart fluidverbunden sein, dass ein paralleles oder serielles Durchströmen der Speicherkammern realisiert wird. Vorteil dieser Anordnung ist, dass unterschiedliche Parameter durch die Auslegung eingestellt werden können, welche z.B. ermöglichen: eine zweistufige, verbesserte Wasserabscheidung, welche insbesondere bei der seriellen Fluidverbindung realisierbar ist und/oder eine Redundanz oder Reserve und/oder eine Detektion eines Fehlerfalls, beispielsweise durch Überwachung des Ansprechens des weiteren (redundanten) Pufferspeicher. Bei zwei- oder mehrstufiger Pufferung können beispielsweise die Pufferspeicher per Magnetventil individuell zu- und weggeschaltet werden oder die Pufferspeicher können durch eine unterschiedliche Auslegung erst bei unterschiedlichen Drücken ansprechen.

Bezüglich der Hausenergiezentrale wird die Aufgabe gelöst durch eine Hausenergiezentrale mit wenigstens einer Brennstoffzelleneinheit und/oder Elektrolyseeinheit, wobei die Hausenergiezentrale eine vorbeschriebene Spülanordnung aufweist, die zum Spülen der Brennstoffzelleneinheit auf ihrer Anodenseite und/oder der Elektrolyseeinheit auf ihrer Kathodenseite angeschlossen ist.

In einer bevorzugten Ausgestaltung der Hausenergiezentrale weist diese ein Aufenthaltsraum-Lüftungssystem auf. Das Aufenthaltsraum-Lüftungssystem kann einen Zuluftkanal aufweisen, über den Zuluft in das Aufenthaltsraum-Lüftungssystem führbar ist. Das Aufenthaltsraum-Lüftungssystem kann einen Raumzuluftkanal aufweisen, über den Luft vom Aufenthaltsraum-Lüftungssystem in einen Aufenthaltsraum, beispielsweise ein Wohnzimmer, führbar ist. Das Aufenthaltsraum-Lüftungssystem kann einen Abluftkanal aufweisen, über den Abluft aus dem Aufenthaltsraum-Lüftungssystem zur Umgebung führbar ist. Bevorzugt ist das Ausströmelement der Spülanordnung derart angeordnet, dass die aus dem Ausströmelement austretende Fluidmasse über den Abluftkanal zur Umgebung austragbar ist.

Alternativ kann über das Ausströmelement die austretende Fluidmasse auch in die Kathodenluft der Brennstoffzelleneinheit zugemischt werden. Der Wasserstoffanteil wird dann beim Durchströmen der Kathode am sich dort befindlichen Katalysator zum Großteil mit Sauerstoff katalytisch umgesetzt. Es entsteht dabei Wasserdampf und Wärme, welche die Lufttemperatur erhöht und dadurch für die Beheizung der Raumluft zur Verfügung steht. .

Die Hausenergiezentrale ist bevorzugt derart ausgebildet und/oder betreibbar, dass ein Nenn-Betriebsdruck der Speicherkammer weniger als 50 Millibar, bevorzugt weniger als 20 Millibar, weiter bevorzugt weniger als 10 Millibar über einem Betriebsdruck des über den Abluftkanal geführten Abluftstroms liegt. Die die Anodenseite der Brennstoffzelleneinheit ist bevorzugt auf einen Betriebsdruck von höchstens 300 Millibar ausgelegt.

Die Hausenergiezentrale mit der Spülanordnung kann entsprechend der vorbeschriebenen Spülanordnung weiter ausgestaltet sein.

Bezüglich des Verfahrens zum Betreiben einer Hausenergiezentrale wird die Aufgabe durch ein Verfahren gelöst mit dem Schritt: Austragen der Fluidmasse über den Abluftkanal zur Umgebung zusammen mit einer Abluft. Das erfindungsgemäße Verfahren wird mit einer vorbeschriebenen Hausenergiezentrale durchgeführt. Eine weitere bevorzugte Anordnung stellt dar, dass die Spülanordnung in Größe und Konfiguration so ausgelegt ist, dass sie gemeinsam für die Brennstoffzelleneinheit und die Elektrolyseeinheit verwendbar ist, falls beide Komponenten gleichzeitig im System vorhanden sind. Typischerweise werden die Brennstoffzelleneinheit und die Elektrolyseeinheit zwar nicht gleichzeitig betrieben, die Anforderungen, die die beide Komponenten an die Spülvorrichtung stellen, sind in der Regel unterschiedlich können aber durch die Einstellung der hier beschriebenen Parameter gezielt erfüllt werden.

Es hat sich als vorteilhaft herausgestellt, wenn die Fluidmasse mit einem Ablass-Massenstrom von höchstens 2,5 Nl/min pro kW Brennstoffzellen-Nennleistung und die Abluft mit einem Volumenstrom von wenigstens 100 m³/h ausgetragen werden. Das Verfahren kann ein Purgen in Intervallen vorsehen, wobei bevorzugt pro Purge maximal 0,8 Nl pro kW Brennstoffzellen-Nennleistung als Fluidmasse aus einer Brennstoffzelleneinheit und/oder einer Elektrolyseeinheit mit einem Spül-Massenstrom austreten. Bevorzugt liegt zwischen den Intervallen eine Spülpause von wenigstens 20 Sekunden, bevorzugt eine Spülpause von mehr als 30 Sekunden.

Bevorzugt sieht das Verfahren vor, dass pro Purge maximal 0,8 Nl pro kW Brennstoffzellen-Nennleistung im Pufferspeicher aufgenommen und über das Ausströmelement mit einem Massenstrom von ungefähr 2 Nl/min pro kW Brennstoffzellen-Nennleistung ausgetragen werden.

Die Ausführungsbeispiele der vorliegenden Erfindung werden im Folgenden beispielhaft unter Bezugnahme auf die beigefügten Figuren erläutert. Es zeigt:
Fig. 1 eine schematische Darstellung eines ersten Ausführungsbeispiels einer Hausenergiezentrale mit einer Spülanordnung;
Fig. 2 eine schematische Darstellung eines zweiten Ausführungsbeispiels einer Hausenergiezentrale mit einer Spülanordnung;
Fig. 3 eine schematische Darstellung des dritten Ausführungsbeispiels einer Hausenergiezentrale mit Rekombinator als Ausströmelement;
Fig. 4 eine schematische Darstellung eines zeitlichen Verlaufs von Spül-Massenstrom und Ablass-Massenstrom;
Fig. 5 eine schematische Darstellung verschiedener Zustände eines Pufferspeichers; und
Fig. 6 eine schematische Darstellung eines Pufferspeichers mit expandierbarer Speicherkammer.

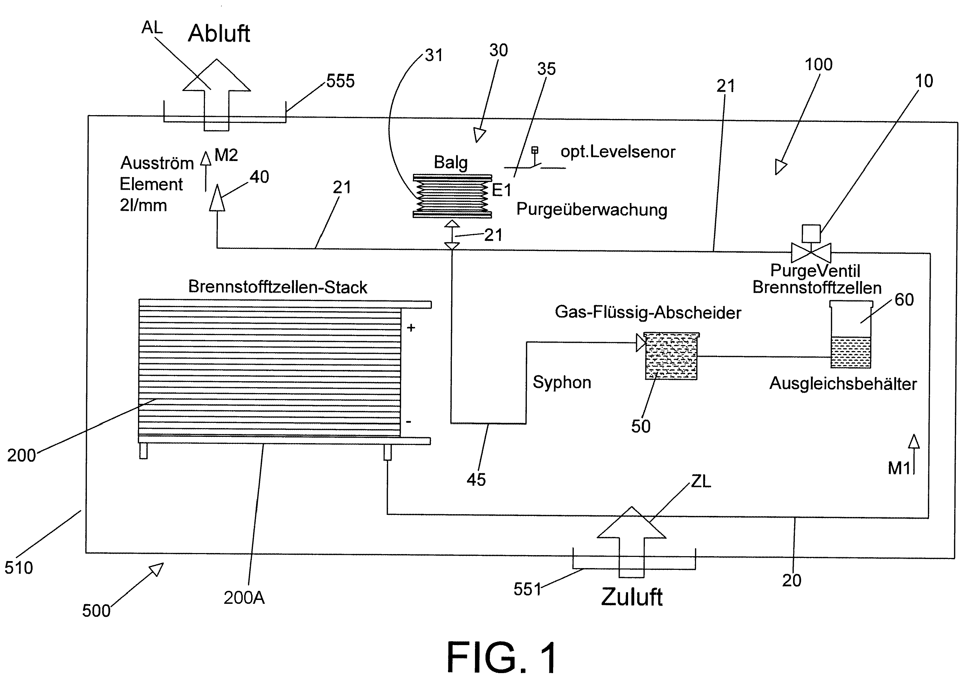

Eine erfindungsgemäße Hausenergiezentrale 500 in Fig. 1 weist eine Brennstoffzelleneinheit 200 auf. Die Hausenergiezentrale 500 kann ein Aufenthaltsraum-Lüftungssystem aufweisen, von dem vorliegend nur ein Zuluftkanal 551 und ein Abluftkanal 555 gezeigt ist. Des Weiteren weist die Hausenergiezentrale 500 eine Spülanordnung 100 zum Spülen der Brennstoffzelleneinheit 200 auf ihrer Anodenseite 200A auf.

Die Spülanordnung 100 weist einen Spülkanal auf, der vorliegend durch einen ersten Spülkanalabschnitt 20 und einen zweiten Spülkanalabschnitt 21 gebildet ist. Der erste 20 und zweite 21 Spülkanalabschnitt sind über ein Purge-Ventil 10 der Spülanordnung 100 miteinander fluidverbindbar. Der erste Spülkanalabschnitt 20 ist einerseits mit der Anodenseite 200A der Brennstoffzelleneinheit 200, in diesem Beispiel mit einer Brennstoffzellen-Nennleistung von 1 kW, andererseits mit dem Purge-Ventil 10 fluidverbunden. Dem Purge-Ventil 10 nachgeschaltet und über den zweiten Spülkanalabschnitt 21 mit dem Purge-Ventil 10 fluidverbunden ist ein Pufferspeicher 30 mit einer Speicherkammer 31. Der Pufferspeicher 30 zweigt vom zweiten Spülkanalabschnitt 21 ab.

Vorliegend ist die Speicherkammer 31 als Faltenbalg ausgebildet. Die als Faltenbalg ausgebildete Speicherkammer 31 dient zur Zwischenspeicherung einer pulsartig mit einem Spül-Massenstrom M1 aus der Brennstoffzelleneinheit 200 auszuspülenden Fluidmasse. Diese impulsartige mit dem Spül-Massenstrom M1 von beispielsweise 100 Nl/min über einen Zeitraum von ca. 500 Millisekunden ausgespülte Fluidmasse kann bei geöffnetem Purge-Ventil 10 in die als Faltenbalg ausgebildete Speicherkammer 31 eintreten, wobei diese dabei expandiert. Die als Faltenbalg ausgebildete Speicherkammer 31 weist in expandiertem Zustand E1 ein Volumen von 2,6 L auf.

Die Spülanordnung 100 weist des Weiteren ein Ausströmelement 40 auf, das mit dem zweiten Spülkanalabschnitt 21 fluidverbunden ist. Das Ausströmelement 40 ist auf einen Ablass-Massenstrom M2 von höchstens 2,5 Nl/min bei Normalbetrieb ausgelegt und dient dem Auslass der Fluidmasse mit einem Ablass-Massenstrom M2, der betragsmäßig deutlich geringer ist als der Spül-Massenstrom M1.

Vom zweiten Spülkanalabschnitt 21 zweigt ein Nebenkanal 45 ab, der vorliegend siphonartig ausgebildet ist. Im Nebenkanal 45 angeordnet sind ein Gas-Flüssig-Abscheider 50 und ein Ausgleichsbehälter 60.

Dem Pufferspeicher 30 ist ein Füllstandssensor 35 zugeordnet, der vorliegend zum Detektieren eines Expansionszustands der Speicherkammer 31 ausgebildet und angeordnet ist. Im vorliegenden Fall ist die Speicherkammer 31 um weniger als 50 % expandiert dargestellt, sodass der Füllstandssensor 35, der vorliegend als optische Lichtschranke ausgebildet ist, nicht auslöst.

Über den Zuluftkanal 551 kann Zuluft ZL in einen Gehäuseabschnitt 510 der Hausenergieanlage 500 eintreten, wobei vorliegend Spülanordnung 100 und Brennstoffzelleneinheit 200 innerhalb des Gehäuseabschnitts 510 der Hausenergieanlage 500 angeordnet sind. Über den Abluftkanal 555 ist Abluft AL aus dem Aufenthaltsraum-Lüftungssystem (nicht gezeigt) zur Umgebung führbar. Das Ausströmelement 40 der Spülanordnung 100 ist derart angeordnet, dass die aus dem Ausströmelement 40 austretende Fluidmasse über den Abluftkanal 555 zur Umgebung austragbar ist.

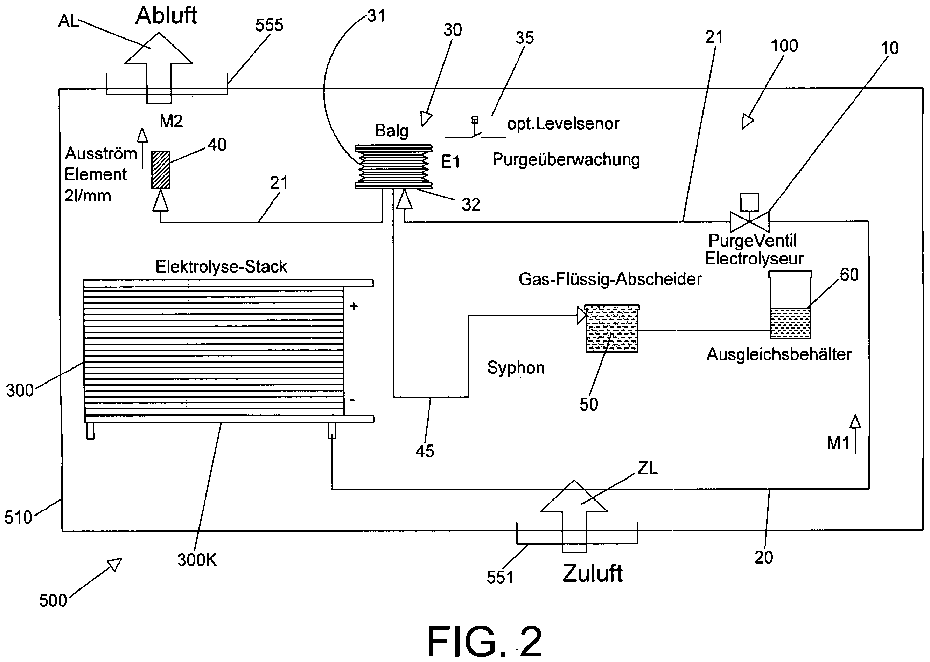

Eine Hausenergiezentrale 500 in Fig. 2 weist eine Elektrolyseeinheit 300 mit angeschlossener Spülanordnung 100 auf. Des Weiteren in Fig. 2 gezeigt ist ein Zuluftkanal 551 eines nicht gezeigten Aufenthaltsraum-Lüftungssystems, der in den Gehäuseabschnitt 510 der Hausenergieanlage 500 eintritt. Des Weiteren ersichtlich ist der Abluftkanal 555 eines nicht gezeigten Aufenthaltsraum-Lüftungssystems, aus dem Abluft AL aus dem Gehäuseabschnitt 510, der der Elektrolyseeinheit 300 zugeordnet ist, aus der Hausenergiezentrale 500 austreten kann.

Die Hausenergiezentrale 500 in Fig. 2 weist eine Spülanordnung 100 zum Spülen der Elektrolyseeinheit 300 auf ihrer Kathodenseite 300K auf. Die Spülanordnung 100 weist einen ersten 20 und zweiten 21 Spülkanalabschnitt auf, die über ein Purge-Ventil 10 der Spülanordnung 100 miteinander fluidverbindbar sind. Die Spülanordnung 100 weist ebenfalls einen dem Purge-Ventil 10 nachgeschalteten Pufferspeicher 30 mit einer Speicherkammer 31 auf, die vorliegend als Faltenbalg ausgebildet ist und der Zwischenspeicherung einer pulsartig mit einem Spül-Massenstrom M1 aus der Elektrolyseeinheit 300 auszuspülenden Fluidmasse vorgesehen ist. Der zweiten Spülkanalabschnitt 21 verläuft zumindest abschnittweise durch den Pufferspeicher 30.

Diese Fluidmasse kann über eine mit dem zweiten Spülkanalabschnitt 21 fluidverbundene Ausströmelement 40 mit einem Ablass-Massenstrom M2, der geringer als der Spül-Massenstrom M1 ist, ausgetragen werden.

Vorliegend ist das Ausströmelement 40 der Spülanordnung 100 derart angeordnet, dass die aus dem Ausströmelement 40 austretende Fluidmasse über den Abluftkanal 555 zur Umgebung austragbar ist.

Die Speicherkammer 31 weist einen innenliegenden Wasserabscheider 32 aufweist, so dass abgeschiedenes Wasser einer Hausenergiezentrale zur weiteren Nutzung zurückgeführt werden kann. Dies erfolgt vorliegend über den Nebenkanal 45.

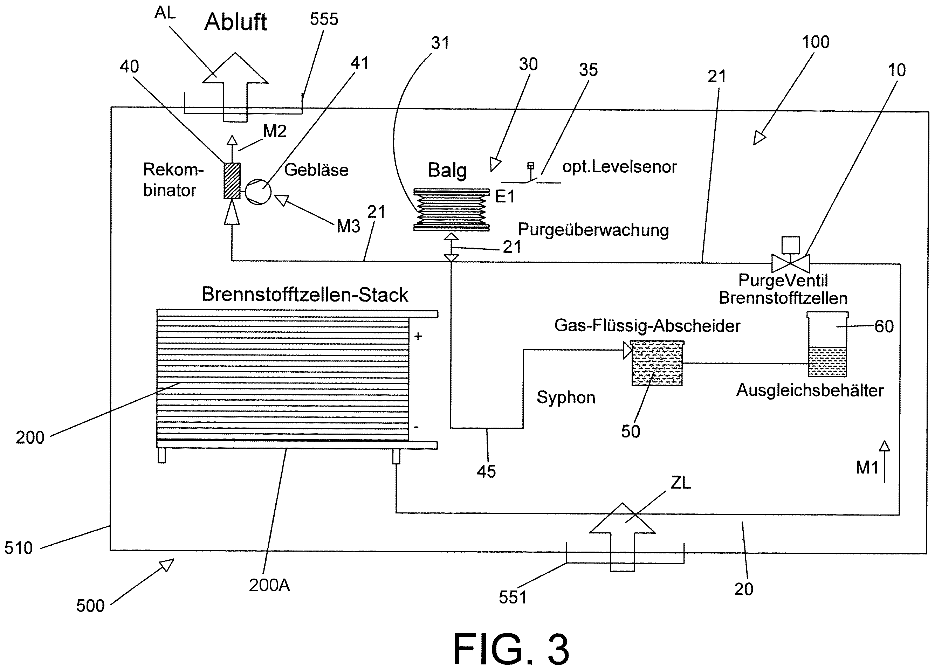

Fig. 3 zeigt die Anordnung aus Fig. 1, bei der das Ausströmelement 40 als Rekombinator bereitgestellt ist. In das als Rekombinator bereitgestellte Ausströmelement 40 strömt der Ablass-Massenstrom M2 und über einen separaten Lüfter 41 ein Luftstrom M3. Im Inneren des Rekombinators werden die beiden Stoffströme vermischt und der im Ablass-Massenstrom enthaltene Wasserstoff mit Sauerstoff aus dem Luftstrom M3 katalytisch zu Wasser und Wärme umgesetzt. Das nun wasserstofffreie, erwärmte Produktgas wird der Abluft AL zugemischt.

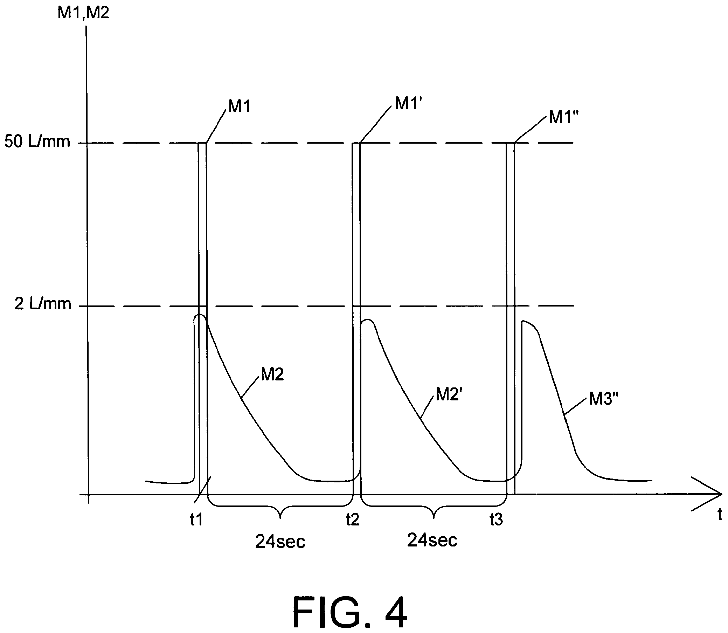

Fig. 4 dient der Erläuterung der Funktion der erfindungsgemäßen Spülanordnung anhand eines zeitlichen Massenstromverlaufsdiagramms.

Eine nicht gezeigte Brennstoffzelleneinheit wird in den Zeitpunkten T1, T2 und T3 jeweils mit einem pulsartigen Spül-Massenstrom M1, M1, M1" gespült. Zwischen den einzelnen Purges liegt eine Pause von jeweils 24 sek. Wie der Fig. 3 entnommen werden kann, weisen die pulsartig ausgespülten Spül-Massenströme M1, M1 M1" jeweils einen Spül-Massenstrom von 5 exemplarisch 96 Nl/min auf, was beispielsweise der Fall ist, wenn ein Purge maximal 0,8 Nl beträgt und innerhalb von 500 Millisekunden an der Anodenseite einer Brennstoffzelleneinheit ausgetragen wird. Ein jeweiliger Ablass-Massenstrom M2, M2' und M3" ist im unteren Teil der Fig. gezeigt. Diese Spül-Massenströme weisen jeweils einen Spül-Massenstrom von unter 2 Nl/min auf. Zur Hälfte eines Intervalls zwischen zwei Purges erreicht ein Spül-Massenstrom M2, M2', M3" beispielhaft einen Massenstrom von 0 L/min, das heißt der Pufferspeicher ist entsprechend entladen und für den nächsten pulsartig auszutreibenden Spül-Massenstrom bereit.

Fig. 5 zeigt drei Expansionszustände E1, E2, E3 einer als Faltenbalg ausgebildeten Speicherkammer 31 eines Pufferspeichers 30 einer erfindungsgemäßen Spülanordnung 100. Gezeigt ist ebenfalls ein dem Pufferspeicher 30 zugeordneter Füllstandssensor 35, vorliegend in Form einer Lichtschranke, zum Detektieren eines jeweiligen Expansionszustands der Speicherkammer 31, vorliegend insbesondere der Fehlerdetektion der als Faltenbalg ausgebildeten Speicherkammer 31.

Fig. 5a) zeigt einen Expansionszustand E1, der im fehlerfreien Normalbetrieb, unmittelbar nach Aufnahme eines pulsartig mit einem Spül-Massenstrom abgegebenen Purges mit 0,8 Nl, also in einem Zustand, der zum Zeitpunkt T1, T2 und T3 in Fig. 3 gezeigt ist. Der nicht expandierte Zustand E1 ist in Fig. 5a) durch die entsprechend bezeichnete Achse angedeutet und wird eingenommen bei einer Fluidmasse von 0 bis 0,25 Nl (Totvolumen) in der als Faltenbalg ausgebildeten Speicherkammer 31.

Wie aus Fig. 5b) ersichtlich ist, ist die als Faltenbalg ausgebildete Speicherkammer 31 auf die Hälfte ihres maximalen Expansionszustandes expandiert. Dies kann beispielsweise bei einem Softwarefehler, der die Purgerate beeinflussen kann, der Fall sein. Der Füllstandssensor 35 detektiert den in Fig. 5B gezeigten Expansionszustand E2 der als Faltenbalg ausgebildeten Speicherkammer 31, wodurch bewirkt wird, dass keine weiteren Purges ausgelöst werden.

In Fig. 5c) ist der Fehlerzustand einer in ihrem maximal expandierten Expansionszustand E3 "hängenden", als Faltenbalg ausgebildeten Speicherkammer 31 dargestellt. Auch dieser Expansionszustand E3 wird durch den Füllstandssensor 35 detektiert. Da die als Faltenbalg ausgebildete Speicherkammer 31 nunmehr nicht als Dämpfungspuffer für einen impulsartig ausgespülten Purge dienen kann, steigt der Ablass-Massenstrom M2 auf ein unerwünscht hohes Maß von beispielsweise 4 NI/min. Um diesen unerwünschten Zustand abzusichern, zweigt vom zweiten Spülkanalabschnitt 21 ein Nebenkanal 45 auf, der einen Gas-Flüssig-Abscheider 50 aufweist. Da der Nebenkanal 45 vorliegend siphonartig ausgebildet ist, dient er als Überdruckschutz für die als Faltenbalg ausgebildete Speicherkammer 31.

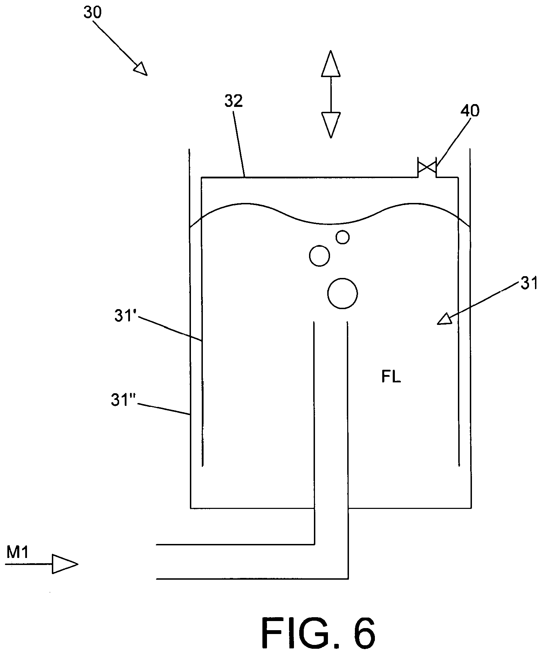

In Fig. 6 ist ein Pufferspeicher 30 mit expandierbarer als Kolbenspeicher ausgebildeter Speicherkammer 31. Der Spül-Massenstrom M1 wird in die flüssigkeitsbefüllte Speicherkammer 31 geleitet, welche im gezeigten Ausführungsbeispiel von konzentrisch angeordneten und gegeneinander axial beweglichen Zylinderelementen 31', 31" begrenzt wird und verdrängt dabei die Flüssigkeit FL. Ähnlich einem Kolben bewegt sich das innere Zylinderelement 31' nach oben und realisiert dadurch eine Expansion der Speicherkammer 31. Wie bei einem Faltenbalg (vgl. Fig. 5) kann durch eine Endplatte, hier die Deckplatte 32 des innere Zylinderelement 31', sowie optional durch eine Federanordnung (nicht gezeigt) ein definierter Druck im Spülgas-Volumen erzeugt werden, der über das Ausströmelement 40 in einem gewünschten Zeitintervall wieder geleert werden kann. Im gezeigten Ausführungsbeispiel der Fig. 6 ist auch die Funktion einer Gas-/Flüssigkeits-Abscheidung realisiert.

## Patentansprüche

1. Spülanordnung (100) zum Spülen (Purgen) einer Brennstoffzelleneinheit (200) auf deren Anodenseite (200A) und/oder einer Elektrolyseeinheit (300) auf deren Kathodenseite (300K), wobei die Spülanordnung (100) einen Spülkanal (20, 21), mit einem ersten (20) und einem zweiten (21) Spülkanalabschnitt aufweist, die über ein Purge-Ventil (10) der Spülanordnung (100) miteinander fluidverbindbar sind, und mit einem mit dem Spülkanal (20, 21) fluidverbundenen und dem Purge-Ventil (10) nachgeschalteten Pufferspeicher (30) mit einer Speicherkammer (31), die zur Zwischenspeicherung einer pulsartig mit einem Spül-Massenstrom (M1) aus der Brennstoffzelleneinheit (200) und/oder der Elektrolyseeinheit (300) auszuspülenden Fluidmasse vorgesehen ist, sodass diese Fluidmasse mit einem Ablass-Massenstrom (M2), der geringer als der Spül-Massenstrom (M1) ist, aus einem mit dem zweiten Spülkanalabschnitt (21) fluidverbundenen Ausströmelement (40) ablassbar ist, wobei die Speicherkammer (31) durch die pulsartig mit den Spül-Massenstrom (M1) aus der Brennstoffzelleneinheit (200) und/oder der Elektrolyseeinheit (300) auszuspülenden Fluidmasse expandierbar ist und
dem Pufferspeicher (30) ein Füllstandsensor (35) zugeordnet ist, der zum Detektieren eines Expansionszustands der Speicherkammer (31) ausgebildet und angeordnet ist.

2. Spülanordnung (100) nach Anspruch 1, **dadurch gekennzeichnet, dass** die Speicherkammer (31) als Faltenbalg oder Kolbenspeicher oder Blasenspeicher oder Rollmembranspeicher ausgebildet ist.

3. Spülanordnung (100) nach Anspruch 2, **dadurch gekennzeichnet, dass** die als Faltenbalg ausgebildete Speicherkammer (31) ausgebildet ist durch Gravitationskraft in ihren nicht expandierten Zustand (E0) zurückbewegt zu werden.

4. Spülanordnung (100) nach Anspruch 2 oder 3, **dadurch gekennzeichnet, dass** die Faltenbalg ausgebildete Speicherkammer (31) in expandiertem Zustand (E1) ein Volumen von weniger als 3 Liter aufweist.

5. Spülanordnung (100) nach wenigstens einem der vorangehenden Ansprüche, **dadurch gekennzeichnet, dass** die Speicherkammer einen innenliegenden Wasserabscheider aufweist, so dass abgeschiedenes Wasser einer Hausenergiezentrale zur weiteren Nutzung zurückgeführt werden kann.

6. Spülanordnung (100) nach wenigstens einem der vorangehenden Ansprüche, **dadurch gekennzeichnet, dass** das Ausströmelement (40) auf einen Ablass-Massenstrom (M2) von höchstens 2,5 Nl/min pro kW Brennstoffzellen-Nennleistung ausgelegt ist.

7. Spülanordnung (100) nach wenigstens einem der vorangehenden Ansprüche, **gekennzeichnet durch** einen Gas-Flüssig-Abscheider (50) und/oder einen Ausgleichsbehälter (60), die in einem von dem zweiten Spülkanalabschnitt (21) abzweigenden Nebenkanal (45) der Spülanordnung (100) angeordnet sind.

8. Spülanordnung (100) nach Anspruch 7, **dadurch gekennzeichnet, dass** der Nebenkanal (45) syphonartig ausgebildet ist.

9. Spülanordnung (100) nach wenigstens einem der vorangehenden Ansprüche, **dadurch gekennzeichnet, dass** das Ausströmelement (40) ein katalytisch aktiver Rekombinator ist oder einen solchen aufweist.

10. Spülanordnung (100) nach Anspruch 9, **dadurch gekennzeichnet, dass** dem Rekombinator ein Kompressor zur Versorgung des Rekombinators mit Luft zugeordnet ist, dessen Ansteuerung mit einer Ansteuerung des Purge-Ventils (10) zeitlich gekoppelt ist.

11. Spülanordnung (100) nach wenigstens einem der vorangehenden Ansprüche, **dadurch gekennzeichnet, dass** ein Durchflusskoeffizient des Ausströmelements (40) größer oder gleich dem des Purge-Ventils (10) ist.

12. Hausenergiezentrale (500) mit wenigstens einer Brennstoffzelleneinheit (200) und/oder Elektrolyseeinheit (300), **dadurch gekennzeichnet, dass** die Hausenergiezentrale (500) eine Spülanordnung (100) nach einem der vorangehenden Ansprüche aufweist, die zum Spülen der Brennstoffzelleneinheit (200) auf ihrer Anodenseite (200A) und/oder der Elektrolyseeinheit (300) auf ihrer Kathodenseite (300K) angeschlossen ist.

13. Hausenergiezentrale (500) nach Anspruch 12, **gekennzeichnet durch** ein Aufenthaltsraum-Lüftungssystem mit einem Außenzuluftkanal (551,) über den Zuluft in das Aufenthaltsraum-Lüftungssystem führbar ist, einem Raumzuluftkanal über den Luft vom Aufenthaltsraum-Lüftungssystem in einen Aufenthaltsraum führbar und mit einem Abluftkanal (555) über den Abluft aus dem Aufenthaltsraum-Lüftungssystem zur Umgebung führbar ist, wobei das Ausströmelement (40) der Spülanordnung (100) derart angeordnet ist, dass die aus dem Ausströmelement (40) austretende Fluidmasse über den Abluftkanal (555) zur Umgebung austragbar ist.

14. Hausenergiezentrale (500) nach Anspruch 12 oder 13, **dadurch gekennzeichnet, dass** ein Nenn-Betriebsdruck der Speicherkammer (31) weniger als 50 Millibar, bevorzugt weniger als 20 Millibar, weiter bevorzugt weniger als 10 Millibar über einem Betriebsdruck des über den Abluftkanal (555) geführten Abluftstroms liegt.

15. Hausenergiezentrale (500) nach einem der Ansprüche 12 bis 14, **dadurch gekennzeichnet, dass** die Anodenseite (200A) der Brennstoffzelleneinheit (200) auf einen Betriebsdruck von höchstens 300 Millibar ausgelegt ist.

16. Verfahren zum Betreiben einer Hausenergiezentrale (500) nach einem der Ansprüche 12 bis 15, aufweisend den Schritt: Austragen der Fluidmasse über den Abluftkanal (555) zur Umgebung zusammen mit einer Abluft.

17. Verfahren nach Anspruch 16, wobei die Fluidmasse mit Ablass-Massenstrom von höchstens 2,5 Nl/min pro kW Brennstoffzellen-Nennleistung und/oder die Abluft mit einem Volumenstrom von wenigstens 500 m3/h ausgetragen wird.

## Claims

1. A flushing arrangement (100) for flushing (purging) a fuel cell unit (200) on its anode side (200A) and/or an electrolysis unit (300) on its cathode side (300K), wherein the flushing arrangement (100) has a flushing channel (20, 21) with a first (20) and a second (21) flushing channel section, which can be fluidically connected to one another via a purge valve (10) of the flushing arrangement (100), and with a buffer store (30) which is fluidically connected to the flushing channel (20, 21) and downstream of the purge valve (10), and which has a storage chamber (31) that is provided for intermediate storage of a fluid mass to be flushed in a pulse-type manner with a flush mass flow (M1) from the fuel cell unit (200) and/or the electrolysis unit (300), so that this fluid mass can be discharged with a discharge mass flow (M2), which is smaller than the flush mass flow (M1), out of an outflow element (40) fluidically connected to the second flushing channel section (21) wherein the storage chamber (31) is expandable by the fluid mass to be flushed in a pulse-type manner with the flush mass flow (M1) from the fuel cell unit (200) and/or the electrolysis unit (300) and
a fill height sensor (35) is assigned to the buffer store (30), which is in particular designed and arranged to detect an expansion state of the storage chamber (31).

2. A flushing arrangement (100) pursuant to claim 1, **characterized in that** the storage chamber (31) is designed as bellows or piston accumulator or bladder accumulator or rolling diaphragm accumulator.

3. A flushing arrangement (100) pursuant to claim 2, **characterized in that** the storage chamber (31) designed as bellows is designed to be moved back into its unexpanded state (E0) by gravitational forces.

4. A flushing arrangement (100) pursuant to claim 2 or 3, **characterized in that**, in its expanded state (E1), the storage chamber (31) designed as bellows has a volume of less than 3 liters.

5. A flushing arrangement (100) pursuant to at least one of the previous claims, **characterized in that** the storage chamber comprises a water separator arranged on the inside so that separated water of a domestic power plant can be returned for further use.

6. A flushing arrangement (100) pursuant to at least one of the previous claims, **characterized in that** the outflow element (40) is designed for a discharge mass flow (M2) of no more than 2.5 Nl/min per kW fuel cell nominal power.

7. A flushing arrangement (100) pursuant to at least one of the previous claims, **characterized by** a gas-liquid separator (50) and/or a compensation tank (60), which are arranged in a side channel (45) of the flushing arrangement (100) which branches off from the second flushing channel section (21).

8. A flushing arrangement (100) pursuant to claim 7, **characterized in that** the side channel (45) has a syphon-like design.

9. A flushing arrangement (100) pursuant to at least one of the previous claims, **characterized in that** the outflow element (40) is or comprises a catalytically active recombiner.

10. A flushing arrangement (100) pursuant to claim 9, **characterized in that** a compressor for supplying the recombiner with air is assigned to the recombiner, wherein the activation of the latter is time-coupled with an activation of the purge valve (10).

11. A flushing arrangement (100) pursuant to at least one of the previous claims, **characterized in that** a flow-through coefficient of the outflow element (40) is higher than or equal to the flow-through coefficient of the purge valve (10).

12. A domestic power plant (500) with at least one fuel cell unit (200) and/or electrolysis unit (300), **characterized in that** the domestic power plant (500) has a flushing arrangement (100) pursuant to one of the previous claims which is connected for flushing the fuel cell unit (200) on its anode side (200A) and/or the electrolysis unit (300) on its cathode side (300K).

13. A domestic power plant (500) pursuant to claim 12, **characterized by** a living space ventilation system with an outside supply air channel (551, 551') via which supply air can be guided into the living space ventilation system, a room supply air channel via which air can be guided into a living space by the living space ventilation system and with an waste air channel (555) via which waste air from the living space ventilation system can be guided to the surrounding environment, wherein the outflow element (40) of the flushing arrangement (100) is arranged such that the fluid mass exiting from the outflow element (40) can be expelled into the surrounding environment via the waste air channel (555).

14. A domestic power plant (500) pursuant to claim 12 or 13, **characterized in that** a nominal operating pressure of the storage chamber (31) is less than 50 millibar, preferably less than 20 millibar, further preferably less than 10 millibar, above an operating pressure of the waste air flow guided through the waste air channel (555).

15. A domestic power plant (500) pursuant to one of claims 12 to 14, **characterized in that** the anode side (200A) of the fuel cell unit (200) is designed for an operating pressure of no more than 300 millibar.

16. A method for operating a domestic power plant (500) pursuant to one of claims 12 to 15, comprising the step of: expelling the fluid mass together with waste air via the waste air channel (555) into the surrounding environment.

17. A method pursuant to claim 16, wherein the fluid mass is expelled with a discharge mass flow of no more than 2.5 Nl/min per kW fuel cell nominal power and/or the waste air is expelled with a volume flow of at least 500 m3/h.

## Revendications

1. Installation (100) de lavage pour le lavage (la purge) d'une unité (200) à piles à combustible du côté (200A) de son anode et/ou d'une unité (300) d'électrolyse du côté (300K) de sa cathode, dans laquelle l'installation (100) de lavage a un conduit (20, 21) de lavage ayant un premier (20) et un deuxième (21) tronçons de conduit de lavage, qui peuvent communiquer fluidiquement l'un avec l'autre par une vanne (10) de purge de l'installation (100) de lavage, et comprenant un accumulateur (30) tampon communiquant fluidiquement avec le conduit (20, 21) de lavage, monté en aval de la vanne (10) de purge et ayant une chambre (31) d'un accumulateur, qui est prévue pour l'accumulation intermédiaire d'une masse de fluide à expulser de manière pulsée à un courant (M1) massique de lavage de l'unité (200) à piles à combustible et/ou de l'unité (300) d'électrolyse, de manière à ce que cette masse de fluide puisse être évacuée à un courant (M2) massique d'évacuation, qui est plus petit que le courant (M1) massique de lavage, d'un élément (40) de sortie communiquant fluidiquement avec le deuxième tronçon (21) du conduit de lavage, dans laquelle la chambre (31) de l'accumulateur peut être expansée par la masse de fluide à expulser de manière pulsée au courant (M1) massique de lavage de l'unité (200) à piles à combustible et/ou de l'unité (300) d'électrolyse et
à l'accumulateur (30) tampon est associé un capteur (35) de niveau qui est constitué et disposé pour la détection d'un état d'expansion de la chambre (31) de l'accumulateur.

2. Installation (100) de lavage suivant la revendication 1, **caractérisée en ce que** la chambre (31) de l'accumulateur est constituée sous la forme d'un soufflet à plis ou d'un accumulateur à piston ou d'un accumulateur à vessie ou d'un accumulateur à membrane roulante.

3. Installation (100) de lavage suivant la revendication 2, **caractérisée en ce que** la chambre (31) de l'accumulateur, constituée sous la forme d'un soufflet à plis, est constituée de manière à revenir par la force de gravité dans son état (E0) non expansé.

4. Installation (100) de lavage suivant la revendication 1 ou 2, **caractérisée en ce que** la chambre (31) de l'accumulateur, constituée sous la forme d'un soufflet à plis, a, à l'état (E1) expansé, un volume de moins de 3 litres.

5. Installation (100) de lavage suivant au moins l'une des revendications précédentes, **caractérisée en ce que** la chambre de l'accumulateur a un séparateur d'eau à l'intérieur, de manière à pouvoir retourner de l'eau séparée à une centrale électrique domestique pour une utilisation ultérieure.

6. Installation (100) de lavage suivant au moins l'une des revendication précédentes, **caractérisée en ce que** l'élément (40) de sortie est conçu pour un courant (M2) massique d'évacuation d'au plus 2, 5 Nl/min par kW de puissance nominale des piles à combustible.

7. Installation (100) de lavage suivant au moins l'une des revendication précédentes, **caractérisée par** un séparateur (50) gaz-liquide et/ou un récipient (60) de compensation, qui sont disposés dans un conduit (45) auxiliaire de l'installation (100) de lavage bifurquant du deuxième tronçon (31) de conduit de lavage.

8. Installation (100) de lavage suivant la revendication 7, **caractérisée en ce que** le conduit (45) auxiliaire est constitué en syphon.

9. Installation (100) de lavage suivant au moins l'une des revendication précédentes, **caractérisée en ce que** l'élément (40) de sortie est un recombinateur actif catalytiquement ou en a un.

10. Installation (100) de lavage suivant la revendication 9, **caractérisée en ce qu'**au recombinateur est associé un compresseur pour l'alimentation du recombinateur en air, dont la commande est couplée dans le temps avec une commande de la vanne (10) de purge.

11. Installation (100) de lavage suivant au moins l'une des revendications précédentes, **caractérisée en ce qu'**un coefficient de débit de l'élément (40) de sortie est supérieur ou égal à celui de la vanne (10) de purge.

12. Centrale (500) électrique domestique comprenant au moins une unité (200) à piles à combustible et/ou une unité (300) d'électrolyse, **caractérisée en ce que** la centrale (500) électrique domestique a une installation (100) de lavage suivant l'une des revendications précédentes qui, pour le lavage, est raccordée à l'unité (200) à piles à combustible du côté (200A) de son anode et/ou à l'unité (300) d'électrolyse du côté (300K) de sa cathode.

13. Centrale (500) électrique domestique suivant la revendication 12, **caractérisée par** un système de ventilation de salle de séjour, comprenant un conduit (551) d'arrivée d'air de l'extérieur, par lequel de l'air peut être envoyé dans le système de ventilation de salle de séjour, un conduit d'arrivée d'air de salle, par lequel de l'air du système d'aération de salle de séjour peut être envoyé dans la salle de séjour, et un conduit (555) pour l'air d'évacuation, par lequel l'air d'évacuation peut être envoyé du système de ventilation de salle de séjour à l'atmosphère extérieure, dans laquelle l'élément (40) de sortie de l'installation (100) de lavage est disposée de manière à ce que la masse de fluide sortant de l'élément (40) de sortie puisse être envoyée à l'atmosphère extérieure par le conduit (555) pour l'air d'évacuation.

14. Centrale (500) électrique domestique suivant la revendication 12 ou 13, **caractérisée en ce qu'**une pression de fonctionnement nominale de la chambre (31) de l'accumulateur est plus petite que 50 mbar, de préférence plus petite que 20 mbar, d'une manière encore plus préférée, plus petite que 10 mbar au-dessus d'une pression de fonctionnement du courant d'air d'évacuation passant dans le conduit (555) pour l'air d'évacuation.

15. Centrale (500) électrique domestique suivant l'une des revendications 12 à 14, **caractérisée en ce que** le côté (200A) d'anode de l'unité (200) à piles à combustible est conçue pour une pression de fonctionnement de 300 mbar au plus.

16. Procédé pour faire fonctionner une centrale (500) électrique domestique suivant l'une des revendications 12 à 15, comprenant le stade :
extraction de la masse de fluide par le conduit (555) pour l'air d'évacuation à l'atmosphère ambiante ensemble avec de l'air d'évacuation.

17. Procédé suivant la revendication 16, dans lequel on extraie la masse de fluide à un
courant massique d'évacuation au plus de 2,5 Nl/min par kW de puissance nominale des piles à combustible et/ou l'air d'évacuation à un courant en volume d'au moins 500 m³/h.
